# EUROPEAN PATENT APPLICATION

(11) **EP 2 011 634 A2**
(43) Date of publication of application: **07.01.2009**
(21) Application number: 08158810.5
(22) Date of filing: 23.06.2008
(51) Int. Cl.: B29C 70/34

(54) **Valve assembly having valve flowbodies and methods of manufacturing**

(30) Priority: 26.06.2007 US 768653
(71) Applicant: Honeywell International Inc., Morristown NJ 07960 (US)
(72) Inventor: Roundy, James S., Gilbert, AZ 85234 (US); Hernandez, Beatriz, 21180, Mexixcali (MX); Cobb, James J., Casa Grande, AZ 85222 (US)
(74) Representative: Buckley, Guy Julian

(57) **Abstract**

Methods are provided for forming a valve flowbody (118). Valve assemblies including the flowbody (118) are also provided. A method includes disposing a first fiber composite fabric piece (600) in a cavity of a first half (502) of an outer mold (500) and placing a foam piece over a portion of the first fiber composite fabric piece (600). A cylinder is placed in the outer mold (500) first half (502) over the foam piece and the first fiber composite fabric piece (600), where the cylinder is made of a second fiber composite fabric piece (802). The first half (502) of the outer mold (500) is assembled with a second half (504) of the outer mold (500) to enclose the cylinder, the foam piece, and the first fiber composite fabric piece (600) therebetween. The assembled outer mold (500) is heated to cure resin impregnated in the first and the second fiber composite fabric piece (802)s to form the valve flowbody (118).

## Description

### TECHNICAL FIELD

The inventive subject matter relates to valves and more particularly, to valve assemblies having valve flowbodies and methods of manufacturing fiber composite flowbodies.

### BACKGROUND

An air distribution system may be used to direct air from one portion of an aircraft to another. In some aircraft configurations, the air distribution system includes an inlet duct that receives air from an air source and two or more outlet ducts that exhaust the received air to a desired area within the aircraft, such as, for example, to an aircraft cabin or an underfloor section of the aircraft. Conventionally, a flow splitter is positioned between the inlet and outlet ducts to distribute the air between the ducts.

The flow splitter typically includes a valve assembly that is made up of a valve flowbody and a butterfly plate. The valve flowbody is disposed between the ducts. The butterfly plate is rotationally mounted within the flowbody and is configured to open and close the valve assembly in response to pressure differentials thereacross. During operation, when the valve is closed, the air may circulate through a first system that includes the inlet duct and one of the outlet ducts. When the valve is fully or partially open, the air circulates through a second system that includes the inlet duct and another one of the outlet ducts.

Although the above assembly performs adequately, it may be improved. For example, many conventional valve assemblies are typically made from metal alloys and thus, may be relatively heavy. More recently, valve assemblies have incorporated lighter weight metal alloys, such as aluminum, to reduce weight; however, the demand for even lighter aircraft components continues to increase.

Hence, there is a need for valve assemblies that are more lightweight than conventional valve assemblies. Moreover, there is a need for valve assemblies that are relatively inexpensive and simple to manufacture. Additionally, it is desirable for the valve assemblies to be capable of being retrofitted into existing systems and functioning at temperature extremes.

### BRIEF SUMMARY

Methods are provided for forming valve flowbodies. Valve assemblies are also provided.

In an embodiment, by way of example only, the method includes disposing a first fiber composite fabric piece in a cavity of a first half of an outer mold and placing a foam piece over a portion of the first fiber composite fabric piece. A cylinder is placed in the outer mold first half over the foam piece and the first fiber composite fabric piece, where the cylinder is made of a second fiber composite fabric piece. The first half of the outer mold is assembled with a second half of the outer mold to enclose the cylinder, the foam piece, and the first fiber composite fabric piece therebetween. The assembled outer mold is heated to cure resin impregnated in the first and the second fiber composite fabric pieces to form the valve flowbody.

In another embodiment, by way of example only, the method includes disposing a first fiber composite fabric piece in a cavity of a first half of an outer mold, the outer mold first half cavity including a depression therein, the first fiber composite fabric piece including a protrusion and a depression woven therein, the protrusion disposed in the outer mold first half cavity depression. A ring-shaped foam piece is positioned over a portion of the first fiber composite fabric piece. A cylinder is placed in the outer mold first half over the foam piece and the first fiber composite fabric piece, where the cylinder is made of a second fiber composite fabric piece. The first half of the outer mold is assembled with a second half of the outer mold to enclose the cylinder, the foam piece, and the first fiber composite fabric piece therebetween. The assembled outer mold is heated to cure resin impregnated in the first and the second fiber composite fabric pieces to form the valve flowbody.

In yet another embodiment, and by way of example, a valve assembly is provided that includes a valve flowbody, an inner layer, an outer layer, and a foam material. The valve flowbody has an inner surface defining a channel, an outer surface, and a support flange extending from the outer surface. The inner layer forms at least a portion of the flowbody inner surface and includes a first fiber composite material. The outer layer forms at least a portion of the flowbody outer surface and the support flange, and the outer layer includes a second fiber composite material. The foam material is disposed between a portion of the inner layer and a portion of the outer layer forming a portion of the support flange.

Other independent features and advantages of the inventive subject matter will become apparent from the following detailed description, taken in conjunction with the accompanying drawings which illustrate, by way of example, the principles of the inventive subject matter.

### BRIEF DESCRIPTION OF THE DRAWINGS

FIG. 1 is a simplified schematic diagram illustrating an air distribution system disposed within an aircraft, according to an embodiment;

FIG. 2 is a cutaway view of a valve assembly that may be implemented into the air distribution system shown in FIG. 1, according to an embodiment;

FIG. 3 is a cross-sectional view of a valve flow body that may be implemented into the valve assembly shown in FIG. 2, according to an embodiment;

FIG. 4 is a flow diagram of a method of forming a fiber composite valve flowbody, according to an embodiment;

FIG. 5 is an inflatable mandrel that may be used in the method depicted in FIG. 4, according to an embodiment;

FIG. 6 is an outer mold that may be used in the method depicted in FIG. 4, according to an embodiment;

FIG. 7 is a fiber composite fabric piece that may be used in the method depicted in FIG. 4, according to an embodiment;

FIG. 8 is another fiber composite fabric piece that may be used in the method depicted in FIG. 4, according to an embodiment; and

FIGs. 9 and 10 are end views of a mandrel as used in the method depicted in FIG. 4, according to an embodiment.

### DETAILED DESCRIPTION OF A PREFERRED EMBODIMENT

The following detailed description of the inventive subject matter is merely exemplary in nature and is not intended to limit the inventive subject matter or the application and uses of the inventive subject matter. Furthermore, there is no intention to be bound by any theory presented in the preceding background of the inventive subject matter or the following detailed description of the inventive subject matter.

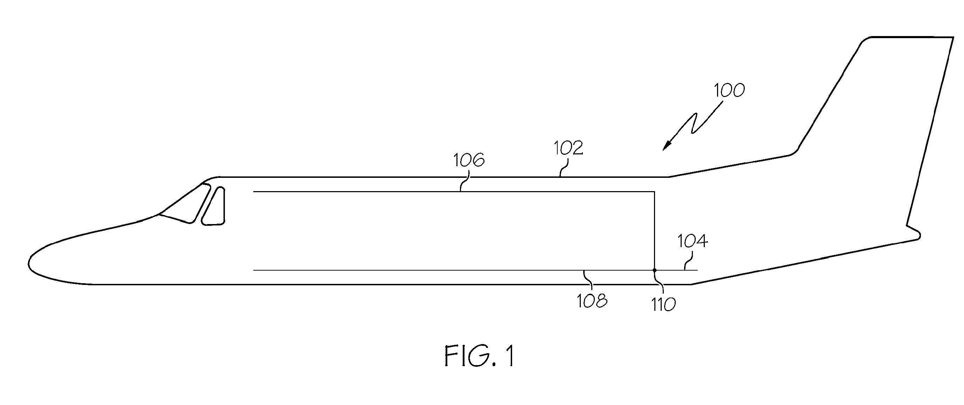

FIG. 1 is a simplified schematic diagram illustrating an air distribution system 100 disposed within an aircraft 102, according to an embodiment. The air distribution system 100 includes an inlet duct 104, two outlet ducts 106, 108 and a valve assembly 110 positioned between the ducts 104, 106, 108. The inlet duct 104 receives air from an air source, such as, for example, engine bleed air, and the outlet ducts 106, 108 exhaust air into desired sections of the aircraft 102. In one exemplary embodiment, the outlet ducts 106, 108 exhaust air into an aircraft underfloor. It will be appreciated that although two outlet ducts 106, 108 are depicted herein, fewer or more outlet ducts may be incorporated into the system 100. The valve assembly 110 regulates air flow through one or more of the outlet ducts 106, 108 by opening or closing in response to the presence or absence of a pressure differential across the valve assembly 110 that exceeds a predetermined value.

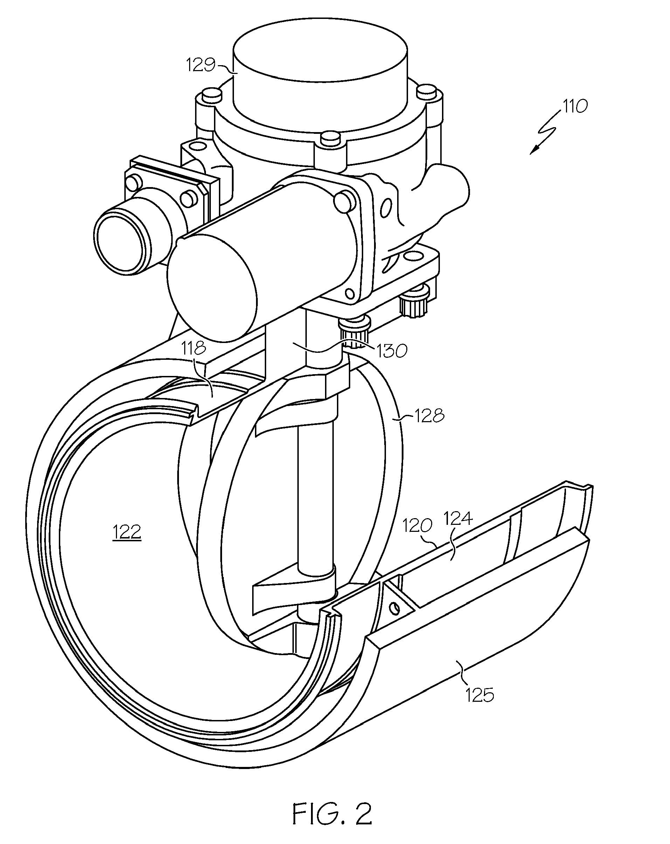

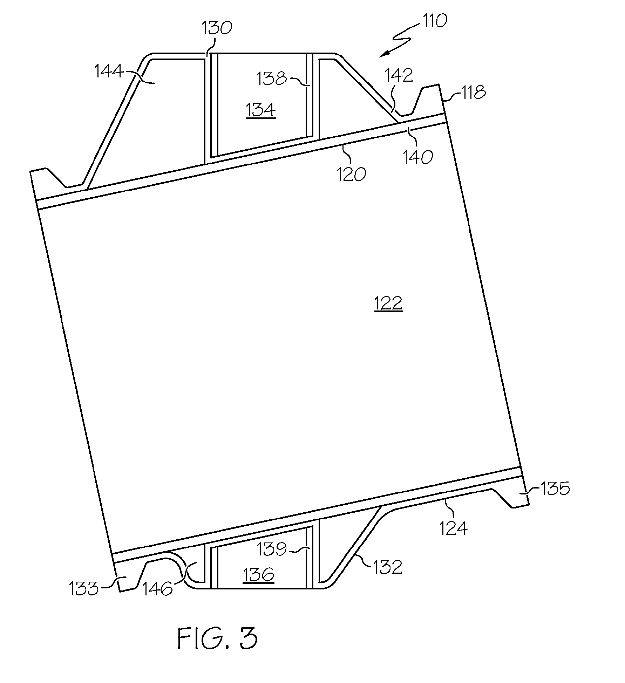

FIG. 2 is a cutaway view of a valve assembly that may be implemented into the air distribution system 100 shown in FIG. 1, according to an embodiment. The valve assembly 110 includes a valve flowbody 118 having an inner surface 120 that defines an air passage 122, and an outer surface 124 and may also include an insulator 125 disposed around the valve flowbody 118. The valve flowbody 118 is further configured to house a valve plate 128 that is rotationally mounted therein. The valve plate 128 blocks and unblocks the air passage 122 and may be actuated by an actuator 129 that responds to an electric, pneumatic, hydraulic, or mechanical signal. Referring also to FIG. 3, which is a cross-sectional view of the valve flowbody 118, two support flanges 130, 132 are included thereon that extend from its outer surface 124. The support flanges 130, 132 include cavities 134, 136 that may be used for housing rolling elements (e.g., bearings) or for attaching the actuator 129 to the valve flowbody 118. To provide further structural support to the support flanges 130, 132, sleeves 138, 139 may be included in the cavities 134, 136. In an embodiment, the valve flowbody 118 includes duct flanges 133, 135 on one or both of its ends that maybe be used to attach the valve flowbody 118 between one or more ducts of the air distribution system 100.

To decrease the weight of the valve assembly 110, the valve flowbody 118 may be made of a fiber composite material and/or foam material. In particular, the valve flowbody 118 may include an inner layer 140 and an outer layer 142 that are each made of fiber composite material. For example, the fiber composite material may be a woven, unidirectional, or triaxial braided carbon fiber of predetermined modulus and may be capable of withstanding temperatures of at least 200°C. Examples of suitable fiber composite materials include, but are not limited to carbon, fiberglass, Kevlar, and ceramic fibers. Additionally, the support flanges 130, 132 may include portions made of foam 144, 146. Suitable foam materials include, but are not limited to polymethacrylimide and bismaleimide.

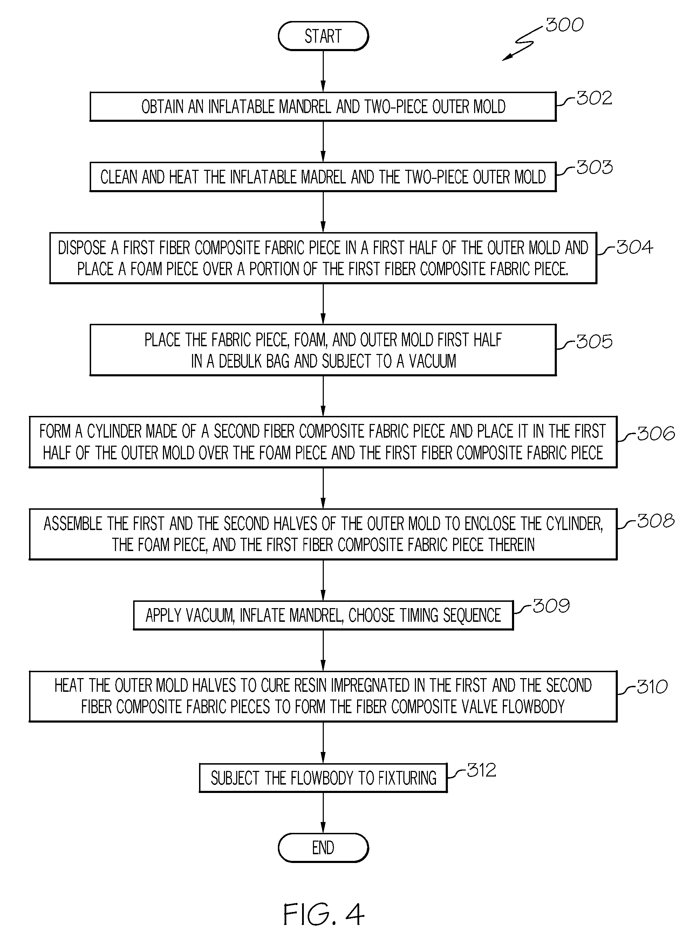

Having provided a description of the valve flowbody 118, a method 300 for forming the valve flowbody 118 will now be provided. FIG. 4 is a flow diagram of the method 300, according to an embodiment. The method 300 will be described briefly in this paragraph, and then in more detail in subsequent paragraphs. The method 300 includes obtaining an inflatable mandrel and a two-piece outer mold, step 302. The inflatable mandrel and the two-piece outer mold are cleaned and heated, step 303. Next, a first fiber composite fabric piece is disposed in a first half of the outer mold and a foam piece is placed over a portion of the first fiber composite fabric piece, step 304. The fabric piece 600, foam, and outer mold first half 502 are placed in a debulk bag and subjected to a vacuum, step 305. A cylinder made of a second fiber composite fabric piece is formed over the inflatable mandrel and placed in the first half of the outer mold over the foam piece and the first fiber composite fabric piece, step 306. The first and second halves of the outer mold are assembled to enclose the cylinder, the foam piece, and the first fiber composite fabric piece therebetween, step 308. Next, a vacuum is applied, the mandrel is inflated to a predetermined pressure level, and a timing sequence based upon resin system is chosen, step 309. Then, the outer mold halves are heated to cure resin impregnated in the first and the second fiber composite fabric pieces to form the fiber composite valve flowbody, step 310. The fiber composite valve flowbody may undergo fixturing, step 312. For ease of understanding each step, FIGs. 3 and 5-10 should also be referenced where appropriate.

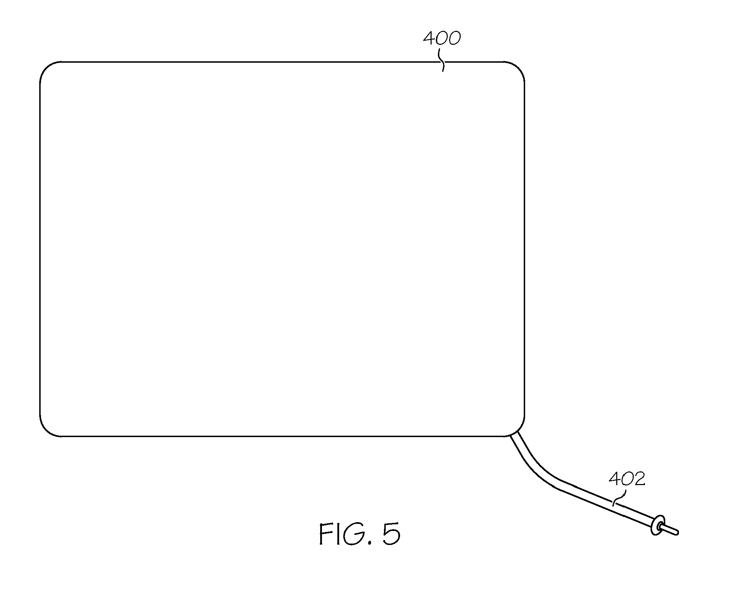

As briefly mentioned above, an inflatable mandrel and a two-piece outer mold are obtained, step 302. FIG. 5 is a perspective view of an inflatable mandrel 400, according to an embodiment. In an embodiment, the inflatable mandrel 400 may be a silicone component having an end 402 capable of receiving air for inflation. As depicted in FIG. 5, the inflatable mandrel 400 has a cylindrical shape useful for forming a valve flowbody 118 having a cylindrical flowpath. In an embodiment in which the valve flowbody 118 may have a flowpath that is not cylindrical, the inflatable mandrel may have a corresponding outer surface shape.

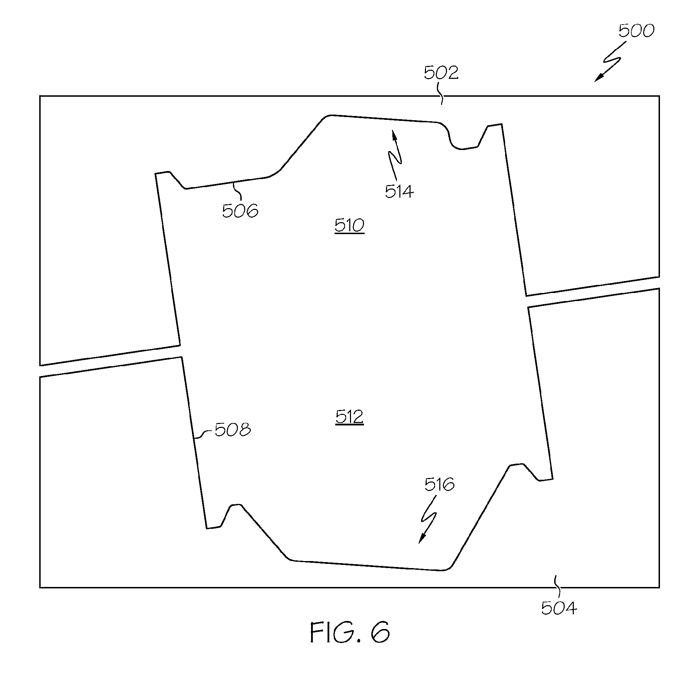

FIG. 6 is a perspective view of a two-piece outer mold 500, according to an embodiment. The two-piece outer mold 500 includes a first half 502 and a second half 504. Each half 502, 504 includes an inner surface 506, 508 that each form a cavity 510, 512 shaped to correspond with a portion of the valve flow body outer surface 124. For example, the cavities 510, 512 each include depressions 514, 516 that may be employed in later steps for accommodating materials for forming the support flanges 130, 132 of the valve flowbody 118. Although both halves 502, 504 are shown as including depressions 514, 516, it will be appreciated that, alternatively, only one half may include a depression.

Referring also to FIG. 4, before using the inflatable mandrel 400 and mold 500, each is cleaned and heated, step 303. In an embodiment, the inflatable mandrel 400 and mold 500 are cleaned with a cleaning compound, such as alcohol. Additionally, a conventionally-used release compound may be applied to one or both, and any excess release compound may be removed. The inflatable mandrel 400 and mold 500 are preheated to about 65° C for about 30 minutes or more. After the inflatable mandrel 400 is heated, it may be pressurized to about 20 psi.

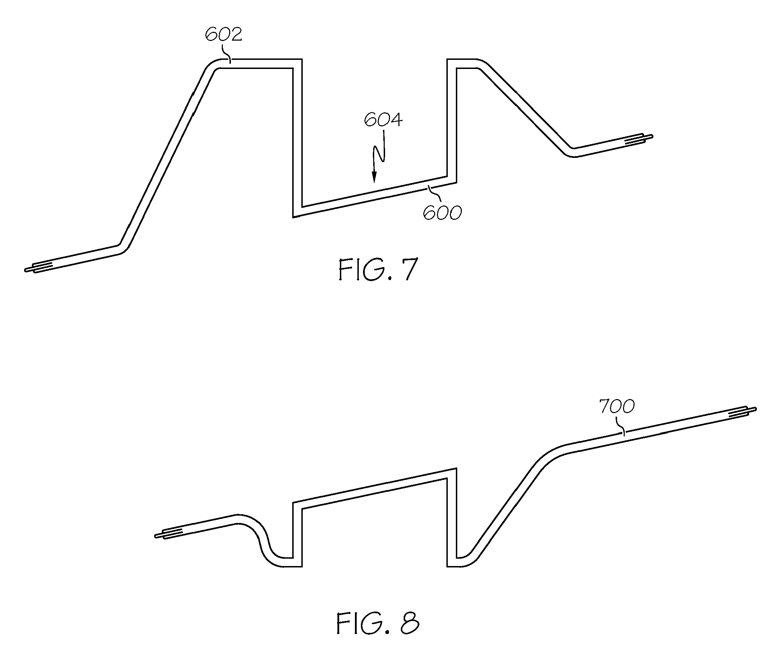

A first fiber composite fabric piece is disposed in the outer mold first half 502 and a foam piece is placed over a portion of the first fiber composite fabric piece to form the support flange 130 of the flowbody 118, step 304. The first fiber composite fabric piece makes up a portion of the flowbody outer layer 142. In an embodiment, the first fiber composite fabric piece is a woven preform. For example, the woven preform may be a substantially flat piece of woven fiber composite material. The material may have any thickness or harness count and may or may not be pre-impregnated with a thermosetting resin. An embodiment of a first fiber composite fabric piece 600 is depicted in FIG. 7. Here, the first fiber composite fabric piece 600 is a woven preform that includes a protrusion 602 and depression 604 therein. In an embodiment, the fabric piece 600 is woven to include the protrusion 602 and depression 604. In any case, the fabric piece 600 is positioned such that the protrusion 602 is disposed in the depression 514 of the cavity 510 of the first half 502 of the outer mold 500.

In an embodiment, the foam piece is disposed over the first fiber composite fabric piece 600. The foam piece may be made of polymethacrylimide or bismaleimide and may be capable of withstanding temperatures of at least about 200°C. Additionally, the foam piece may have any shape suitable for providing structure to the valve flowbody support flanges (e.g., support flanges 130, 132 in FIG. 3). For example, in an embodiment in which the outer mold includes depressions 514, 516 and portions of the fabric piece are disposed therein to line the depressions 514, 516, the foam piece may be shaped to fill one of the depressions 514, 516. In another embodiment in which the fabric piece is woven to include a protrusion 602 and a depression 604, the foam piece may be shaped to fit into the fabric piece depression 604 when the fabric piece 600 is placed in the outer mold cavity 510. For example, the foam piece may be ring-shaped.

Referring again to FIG. 4, the fabric piece 600, foam, and outer mold first half 502 are placed in a debulk bag and subjected to a vacuum, step 305. Debulking removes wrinkles and air that may be trapped in the fabric piece. Although a single fabric piece is described, it will be appreciated that more may alternatively be used. Moreover, if more than one fabric piece is used, debulking may be employed after each piece or every two or three pieces are laid.

It will be appreciated that steps 304 and 305 may be used to form the other support flange 132 of the flowbody 118. For example, another fabric piece 700 (such as shown in FIG. 8) shaped to fill the outer mold second half 504 (FIG. 6) and a corresponding foam piece may be employed in a similar manner as that described above.

A cylinder comprising a second fiber composite fabric piece is placed in the outer mold first half over the foam piece and the first fiber composite fabric piece, step 306. The cylinder makes up the inner layer 140 of the flowbody 118 and may be formed or disposed around the inflatable mandrel 400. In an embodiment, the cylinder is made by wrapping the second fiber composite fabric piece or "ply" and other fabric plies around the inflatable mandrel 400. The plies may be pre-impregnated with a thermosetting resin, such as, for example, bismaleimide; alternatively, they may not be.

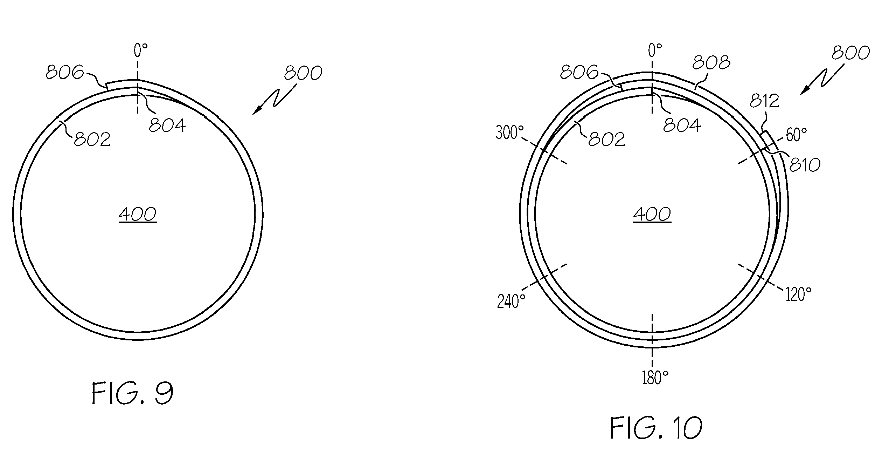

FIGs. 9 and 10 illustrate stages of forming a cylinder 800, according to an embodiment. As shown in FIG. 9, the second fiber composite fabric ply 802 may be wrapped around substantially all of an outer surface of the inflatable mandrel 400. The second fabric ply 802 may have an end 804 that is laid at a 0° location on the inflatable mandrel 400. The end 804 overlaps the other end 806 of the second fabric ply 802 by, for example, about 1-2 cm. Turning to FIG. 10, a third fabric ply 808 may be placed over the second fabric ply 802 such that an end 810 of the third fabric ply 808 is not aligned with the first or second ends 804, 806 of the second fabric ply 802. For example, the third fabric play 808 end 810 may be laid at a 60° location. The end 810 of the third fabric ply 808 overlaps its other end 812 by, for example, about 1-2 cm. It will be appreciated that each successive ply may then be laid in a similar manner, and for example, may have ends laid at a 120° location, a 180° location, a 240° location, and a 300° location. Between each wrapping step or between every two or three wrapping steps, the mandrel 400 and plies 802, 808 may be placed in a bag and a vacuum may be applied thereto to debulk the plies 802, 808. Debulking compresses the plies to the outer surface of the inflatable mandrel 400 and removes excess air that may be trapped between the plies 802, 808. In an embodiment, debulking occurs for between about 10 to 15 minutes. Although this embodiment specifies six particular locations and thus, alludes to the layering of six plies, it will be appreciated that more or fewer locations, different locations, and more or fewer plies may alternatively be used.

In another embodiment, the cylinder 800 may be made using a woven fabric preform. In particular, the second fiber composite fabric piece may be formed by weaving fiber composite threads into a hollow cylinder or sock and the inflatable mandrel 400 is inserted therein. The woven preform may or may not be pre-impregnated with a thermosetting resin. No matter the particular method of fabrication, the cylinder 800 is then placed in the outer mold first half 502 over the foam piece and the first fiber composite fabric.

Referring again to FIG. 4, the first and second halves 502, 504 of the outer mold 500 are assembled to enclose the cylinder 800, the mandrel 400, the foam pieces, and the first fiber composite fabric piece therebetween, step 308. In an embodiment, the inflatable mandrel 400 is positioned such that its end 402 extends outside of the assembled outer mold. The outer mold 500 may have sealing gaskets that may be included so that it may be leak free. A vacuum may then be applied to the mold to ensure the assembled mold has substantially no leaks. In an embodiment in which resin is injected, the vacuum may be used to draw the resin into the assembled outer mold. In an embodiment in which the cylinder 800 and first fiber composite fabric piece are not pre-impregnated with resin, the mandrel is inflated to a preselected pressure, a vacuum is applied to the mold, and resin is injected into the cavities of the outer mold 500.

The assembled outer mold 500 is heated to cure a selected resin system (e.g., a preimpregnated fabric or non-impregnated fabric by resin transfer molding) in the fiber composite fabric pieces to form the fiber composite valve flowbody 118, step 310. In an embodiment, the assembled outer mold 500 may be placed in an oven or may be heated using heating elements that may be included as part of the outer mold 500. The assembled outer mold 500 may then be heated to a cure temperature and pressure of the selected resin system.

In an embodiment, the assembled outer mold 500 may undergo multiple cure cycle steps before the resin therein fully cures. For example, the assembled outer mold 500 may be heated to about 100 °C to about 120 °C at a steady rate. A vacuum may then be applied. To ensure the inner surface of the cylinder 800 remains suitably shaped, the mandrel 400 is inflated via its end 402 to a pressure. In an embodiment in which a non-preimpregnated fabric is used, the mandrel 400 may be inflated to a pressure that exceeds the resin injection pressure by between about 0 psi and about 100 psi. In an embodiment in which preimpregnated fabric is used, the mandrel may be inflated to a pressure of between about 0 psi and about 45 psi. If the assembled outer mold 50 is under vacuum, the vacuum is then removed. If a non-preimpregnated fabric is employed, the selected resin system is injected into the cavities of the outer mold 500 within a pressure range of between about 60 psi to about 300 psi at a resin temperature of between about 20°C and about 140°C.

The assembled outer mold 500 is maintained at a temperature that is between about 100°C and about 120°C at a selected mandrel pressure for about 45-60 minutes. Pressure on the mandrel may then be increased an additional 0 psi to 100 psi and air and excess resin may be removed from the mold 500. The temperature of the assembled outer mold is then increased at a steady rate to between about 180-200 °C, while maintaining the increased mandrel pressure for about 2-6 hours. The assembled outer mold 500 is then cooled at a steady rate to about 50-65 °C. Pressure in the mandrel 400 is released and a vacuum is applied to collapse the mandrel.

The assembled outer mold is disassembled and the mandrel is removed to facilitate removal and inspection of the fiber composite valve flowbody 118 therein. After inspection, the flowbody 118 may be subjected to a post-cure step where the valve flowbody is heated to a temperature between about 180 °C and about 225 °C for about 6 hours.

The valve flowbody 118 may undergo a final machining step, step 312. For example, in an embodiment, the valve flowbody 118 may be mounted to a fixture and excess material thereon may be trimmed away. In embodiments in which the flowbody 118 includes protrusions and depressions on its support flanges 130, 132, sleeves 138, 139 may be inserted into the depressions to provide additional structural support for the support flanges 130, 132. The sleeves 138, 139 may be press-fit into the depressions or may be adhered thereto. In embodiments in which the flowbody 118 does not include protrusions and depressions, holes may alternatively be machined at least partially through the flowbody 118. The sleeves 138, 139 may then be inserted into the flowbody holes. A valve plate 128 may be rotationally mounted within the valve flowbody 118.

Valve assemblies have now been provided that may be more lightweight than conventional valve assemblies. Moreover, the valve assemblies may be relatively inexpensive and simple to manufacture and operate over at extreme temperature ranges. Additionally, the valve assemblies may be capable of being retrofitted into existing aircraft systems.

While the inventive subject matter has been described with reference to a preferred embodiment, it will be understood by those skilled in the art that various changes may be made and equivalents may be substituted for elements thereof without departing from the scope of the inventive subject matter. In addition, many modifications may be made to adapt to a particular situation or material to the teachings of the inventive subject matter without departing from the essential scope thereof. Therefore, it is intended that the inventive subject matter not be limited to the particular embodiment disclosed as the best mode contemplated for carrying out this inventive subject matter, but that the inventive subject matter will include all embodiments falling within the scope of the appended claims.

## Claims

1. A method of forming a valve flowbody (118), the method comprising the steps of:
disposing (304) a first fiber composite fabric piece (600) in a cavity of a first half (502) of an outer mold (500) and placing a foam piece over a portion of the first fiber composite fabric piece (600);
placing (305) a cylinder in the outer mold (500) first half (502) over the foam piece and the first fiber composite fabric piece (600), the cylinder comprising a second fiber composite fabric piece (802);
assembling (308) the first half (502) of the outer mold (500) with a second half (504) of the outer mold (500) to enclose the cylinder, the foam piece, and the first fiber composite fabric piece (600) therebetween; and
heating (310) the assembled outer mold (500) to cure resin impregnated in the first and the second fiber composite fabric piece (802)s to form the valve flowbody (118).

2. The method of claim 1, wherein:
the step of placing (305) the cylinder comprises forming (306) the cylinder by wrapping the second fiber composite fabric piece (802) around at least a portion of an inflatable mandrel (400).

3. The method of claim 2, wherein the step of wrapping the second fiber composite fabric piece (802) comprises wrapping the second fiber composite fabric piece (802) such that a first end (804) of the second fiber composite fabric piece (802) overlaps a second end (806) of the second fiber composite fabric piece (802).

4. The method of claim 3, wherein the step of forming the cylinder further comprises placing a third fiber composite fabric piece (808) over the second fiber composite fabric piece (802) such that a first end (810) of the third fiber composite fabric piece (808) is not aligned with the first or second ends (804, 806) of the second fiber composite fabric piece (802).

5. The method of claim 2, wherein the step of forming the cylinder comprises forming (306) the cylinder from a second fiber composite fabric piece (802) woven into a cylinder shape and inserting an inflatable mandrel (400) therein.

6. The method of claim 2, wherein:
the step of disposing (304) the first fiber composite fabric piece (600) comprises disposing a first fiber composite fabric piece (600) pre-impregnated with a thermosetting resin in the first half (502) of the outer mold (500); and
the step of forming (306) the cylinder comprises forming a cylinder from a second fiber composite fabric piece (802) pre-impregnated with a thermosetting resin.

7. The method of claim 1, further comprising injecting a thermosetting resin into the assembled outer mold (500).

8. The method of claim 1, wherein:
the outer mold (500) cavity includes a depression therein;
the first fiber composite fabric piece (600) includes a protrusion (602) and a depression (604) woven therein; and
the step of disposing a first fiber composite fabric piece (600) in a cavity (510) of a first half (502) of an outer mold (500) and a foam piece over a portion of the first fiber composite fabric piece (600) comprises:
positioning the first fiber composite fabric piece (600) into the outer mold (500) first half (502), such that the protrusion is disposed in the outer mold depression (604); and
disposing a ring-shaped foam piece over the first fiber composite fabric piece (600).
